# EUROPÄISCHE PATENTSCHRIFT

(11) **EP 3 740 712 B1**
(45) Veröffentlichungstag und Bekanntmachung des Hinweises auf die Patenterteilung: **19.04.2023**
(21) Anmeldenummer: 19700857.6
(22) Anmeldetag: 17.01.2019
(51) Int. Cl.: F17C 1/14, F17C 13/00, F17C 1/00

(54) **KRYOGENBEHÄLTER**
CRYOGENIC TANK
RÉSERVOIR CRYOGÉNIQUE

(30) Priorität: 19.01.2018 EP 18020029
(43) Veröffentlichungstag der Anmeldung: 25.11.2020
(73) Patentinhaber: Linde GmbH, 82049 Pullach (DE)
(72) Erfinder: EHEGARTNER, Florian, 84524 Neuötting (DE)
(74) Vertreter: Meilinger, Claudia Sabine
(86) Internationale Anmeldenummer: PCT/EP2019/025015
(87) Internationale Veröffentlichungsnummer: WO 2019/141510

(56) Entgegenhaltungen:
- DE-C- 592 298
- DE-U1- 20 205 808
- GB-A- 412 814
- US-A- 3 122 000
- US-A- 5 165 246
- US-A1- 2013 313 341

## Beschreibung

Die Erfindung betrifft einen Kryogenbehälter mit einem inneren Behälter und einem äußeren Behälter sowie einem evakuierbaren Zwischenraum zwischen dem inneren Behälter und dem äußeren Behälter und ein Verfahren zur Herstellung eines entsprechenden Kryogenbehälters.

### Stand der Technik

Flüssiggase kommen in zahlreichen Anwendungsbereichen zum Einsatz, beispielsweise bei der Metallverarbeitung, in der Medizintechnik und Elektronik, bei der Wasseraufbereitung und Energiegewinnung sowie in der Nahrungsmittelindustrie. Heute werden Industriegase zunehmend in flüssiger Form an den Kunden geliefert und vor Ort gelagert, bevor sie weiterverwendet werden.

Zur Lagerung bzw. zum Transport derartiger Flüssiggase oder anderer Fluide kommen vakuumisolierte Kryogenbehälter bzw. Tieftemperaturtanks zum Einsatz, mit einem inneren Behälter und einem äußeren Behälter und einem zur Vakuumisolation evakuierbaren Zwischenraum zwischen dem inneren Behälter und dem äußeren Behälter (sog. Doppelwandbehälter).

Zur Entnahme eines Fluids an einem tiefsten Punkt aus einem entsprechenden inneren Behälter kann dieser auch mit einer Ausbuchtung versehen sein, wie beispielsweise in der US 5,165,246 A gezeigt. An einem tiefsten Punkt einer solchen Ausbuchtung kann eine Leitung angeschlossen werden.

Die US 3,122,000 A offenbart eine Anordnung mit einem äußeren Behälter und einem inneren Behälter, wobei ein Zwischenraum mit isolierendem Material gefüllt ist. Ein oberer Bereich des inneren Behälters weist einen Durchbruch mit einem Flansch, einem Dichtring und einer Abdeckung auf.

Die DE 592 298 C zeigt einen Einsatzbehälter, der unter Bildung eines schmalen Zwischenraums von einem Druckgefäß umschlossen ist. Ein Hilfsgefäß ist unterhalb des Druckgefäßes angeordnet. Beide Gefäße sind von einem Gehäuse umschlossen. Am Boden des Einsatzbehälters führt ein Rohrstutzen in das Hilfsgefäß.

Die GB 412 814 A zeigt eine Anordnung mit einem ersten sphärischen Behälter. Ein zweiter sphärischer Behälter ist derart auf dem ersten Behälter angeordnet, dass er teilweise in diesen hinein ragt. Die Behälter sind von einer Isolationsschicht umgegeben und über Leitungen verbunden.

Üblicherweise ist zur Entnahme und zum Befüllen eines Fluids je nach Anzahl der jeweiligen Verbraucher bzw. Fülleinrichtungen eine Vielzahl von Leitungen bzw. Rohrleitungen vorgesehen, wobei die Leitungen von dem inneren Behälter durch den Zwischenraum und aus dem äußeren Behälter hinausgeführt sind. Zu diesem Zweck ist für jede dieser Leitungen ein Stutzen vorgesehen, über welchen die jeweilige Leitung mit dem inneren Behälter verbunden ist. Für jeden Stutzen wird ein Loch in den Mantel bzw. den Boden des inneren Behälters geschnitten bzw. gebohrt sowie eine Schweißkantenvorbereitung durchgeführt.

Derartige einzelne Stutzen für jede Leitung sind jedoch kostenintensiv und aufwendig in der Herstellung, da die Stutzen gemäß vorgegebenen Berechnungsvorschriften zu dimensionieren sind und definierte Abstände untereinander aufzuweisen haben. Eine Verbesserung von Kryogenbehältern ist daher wünschenswert, insbesondere um den inneren Behälter eines Kryogenbehälters auf konstruktiv einfache Weise mit einer Vielzahl von Leitungen verbinden zu können.

### Offenbarung der Erfindung

Erfindungsgemäß werden ein Kryogenbehälter und ein Verfahren zur Herstellung eines entsprechenden Kryogenbehälters mit den Merkmalen der unabhängigen Patentansprüche vorgeschlagen. Vorteilhafte Ausgestaltungen der vorliegenden Erfindung sind Gegenstand der Unteransprüche sowie der nachfolgenden Beschreibung. Vorteile und Ausgestaltungen des erfindungsgemäßen Kryogenbehälters sowie des zugehörigen Verfahrens ergeben sich aus der nachfolgenden Beschreibung in analoger Weise.

Der Kryogenbehälter ist als Doppelwandbehälter ausgebildet und weist somit einen inneren Behälter und einen äußeren Behälter sowie einen evakuierbaren Zwischenraum zwischen dem inneren Behälter und dem äußeren Behälter zur Vakuumisolierung auf. In dem Zwischenraum kann ein Isoliermaterial mit geringer Wärmeleitfähigkeit angeordnet sein, z.B. Perlit. Insbesondere ist der Kryogenbehälter zum Transport bzw. zur Lagerung eines tiefkalten Fluids, insbesondere eines kryogenen Fluids bzw. Kryogens, vorgesehen.

Der Kryogenbehälter weist wenigstens einen Fluidverteilerbehälter auf, der einen Innenraum aufweist, der sich von einer Wand des inneren Behälters in den evakuierbaren Zwischenraum erstreckt, der zumindest teilweise in dem evakuierbaren Zwischenraum angeordnet ist, und der mit dem inneren Behälter in Fluidverbindung steht.

Unter einer Erstreckung des Innenraums des Fluidverteilerbehälters in den bzw. der Anordnung dieses Innenraums in dem evakuierbaren Zwischenraum sei insbesondere verstanden, dass der Fluidverteilerbehälter eine von der Wand des inneren Behälters ausgehende Ausbuchtung in den ansonsten zur Vakuumisolierung dienenden Zwischenraum bildet. Der Innenraum des Fluidverteilerbehälters steht dabei nicht mit dem Zwischenraum in Fluidkontakt.

Der innere Behälter einerseits und der Fluidverteilerbehälter andererseits können mindestens zweistückig ausgebildet und miteinander verbunden sein, d.h. der innere Behälter und der Fluidverteilerbehälter sind jeweils als separate Bauteile ausgebildet, welche auf zweckmäßige Weise, beispielsweise stoffschlüssig, miteinander verbunden sind. Dabei können der innere Behälter und der Fluidverteilerbehälter selbst jeweils einstückig oder auch mehrstückig ausgebildet sein. Insbesondere sind der innere Behälter und der Fluidverteilerbehälter einzelne Bauteile bzw. Einzelteile, welche separat voneinander individuell gefertigt werden können. Zweckmäßigerweise werden der innere Behälter und der Fluidverteilerbehälter erst miteinander verbunden, nachdem diese beiden Einzelteile komplett gefertigt wurden.

Der Innenraum des Fluidverteilerbehälters wird über eine Wandung begrenzt, in der mehrere Öffnungen ausgebildet sind, die zum Anschluss von jeweils wenigstens einer Leitung bzw. Rohrleitung eingerichtet oder jeweils mit einer solchen Leitung verbunden sind. Die mehreren Öffnungen in der Wandung des Fluidverteilerbehälters können insbesondere dadurch zur Verbindung mit entsprechenden Leitungen eingerichtet sein, dass sie einen Flansch oder eine andersartig ausgebildete Ankoppelstruktur, beispielsweise ein Schraubgewinde oder dergleichen, aufweisen. Insbesondere liegt jedoch eine feste Verbindung mit den Öffnungen vor, beispielsweise in Form einer Schweißverbindung.

Der Fluidverteilerbehälter bzw. dessen Wandung ist zweckmäßigerweise aus demselben Material gefertigt wie der innere Behälter und/oder der äußere Behälter, beispielsweise aus Edelstahl, austenitischem Stahl und/oder Karbonstahl. Die Öffnungen in der Wandung des Fluidverteilerbehälters sind insbesondere durch Anschlussstutzen definiert, an die entsprechende Leitungen angebracht werden. Die Anschlussstutzen können insbesondere einstückig mit der Wandung des Fluidverteilerbehälters ausgebildet sein. Der Fluidverteilerbehälter weist wenigstens zwei derartige Öffnungen auf. Die Öffnungen können jeweils denselben Durchmesser oder insbesondere auch unterschiedliche Durchmesser besitzen, so dass insbesondere unterschiedliche Leitungen mit unterschiedlichen Durchmessern angeschlossen werden können.

Der Fluidverteilerbehälter bzw. dessen Wandung weist ist im Rahmen der vorliegenden Erfindung einen gewölbten bzw. gekrümmten Abschnitt auf. Durch eine derartige gewölbte Form können insbesondere für eine Druckbeaufschlagung des Fluidverteilerbehälters bestmögliche Eigenschaften erreicht werden, insbesondere mit geringer Wanddicke bei hoher Stabilität. Der Fluidverteilerbehälter kann somit insbesondere platz- und materialsparend und stabil gebaut werden.

Erfindungsgemäß ist eine Wandstärke der Wandung des Fluidverteilerbehälters, insbesondere in dem gewölbten Abschnitt, zumindest an einer Stelle geringer ausgebildet als die Wandstärke des inneren Behälters in Bereichen, in denen sich kein Fluidverteilerbehälter befindet. Die erwähnte, zumindest an einer Stelle der Wandung des Fluidverteilerbehälters vorliegende geringere Wandstärke beträgt dabei erfindungsgemäß weniger als 90%, insbesondere weniger als 80%, weniger als 70% oder weniger als 60% und insbesondere zugleich mehr als 10%, mehr als 20%, mehr als 30%, mehr als 40% oder mehr als 50% der Wandstärke des inneren Behälters.

In Fällen, in denen unterschiedliche Wandstärken des inneren Behälters verwendet werden, was beispielsweise aus Fertigungsgründen und/oder zur Anpassung an die jeweils wirkenden Kräfte vorteilhaft sein kann, beziehen sich die genannten Werte für die erwähnte, zumindest an einer Stelle der Wandung des Fluidverteilerbehälters vorliegende geringere Wandstärke insbesondere auf eine mittlere oder auf eine geringste Wandstärke des inneren Behälters außerhalb von Bereichen, in denen sich ein Fluidverteilerbehälter befindet. Die "mittlere Wandstärke" kann ein gewichtetes Mittel oder ein arithmetisches Mittel darstellen, wobei eine Gewichtung zur Bestimmung des Mittelwerts über die jeweiligen Wandflächenanteile mit bestimmten Wandstärken erfolgt. Es kann sich jedoch auch um einen ungewichteten Durchschnitt handeln. Die Wandstärke außerhalb der Bereiche, in denen sich ein Fluidverteilerbehälter befindet, kann auch insbesondere die Wandstärke in dem Bereich sein, der den Anbringungsort eines entsprechenden Fluidverteilerbehälters umgibt und sich damit direkt an diesen anschließt.

Es versteht sich jeweils, dass die Wandung des gewölbten Abschnitts im Bereich der Öffnungen unterbrochen ist. Daher beziehen sich die obigen Erläuterungen bezüglich der zumindest an einer Stelle der Wandung des Fluidverteilerbehälters vorliegenden geringeren Wandstärke auf einen Bereich außerhalb der jeweiligen Öffnungen und ggf. vorhandenen Anschlussstutzen, die die Öffnungen umgeben. Im Bereich der Öffnungen ist keine Wandung vorhanden, die eine Wandstärke aufweisen könnte, und Anschlussstutzen können lokal eine größere Wandstärke zur Folge haben.

Durch die an zumindest an einer Stelle der Wandung des Fluidverteilerbehälters vorliegende geringe Wandstärke kann die Fertigung eines entsprechenden Kryogenbehälters deutlich materialsparender erfolgen. Weil zur Ausbildung der Öffnungen nur dünneres Material bearbeitet werden muss, ist die Ausbildung entsprechender Öffnungen technisch deutlich einfacher. In Bereichen, in denen keine Öffnungen angeordnet sind, und beispielsweise ein Materialübergang zur Wandung des inneren Behälters bereitgestellt werden soll, kann eine größere Wandstärke verwendet werden. In einer derartigen Ausgestaltung unterscheiden sich also vorteilhafterweise die Wandstärken an unterschiedlichen Stellen der Wandung des Fluidverteilerbehälters bzw. der wenigstens eine Fluidverteilerbehälter kann in einem Bereich, in dem er mit dem inneren Behälter verbunden ist, eine größere Wandstärke aufweisen als in einem anderen Bereich. Weitere Details werden unten erläutert.

Der gewölbte Abschnitt ist insbesondere kuppelförmig ausgebildet und weist einen Scheitelpunkt auf. Der Scheitelpunkt kann insbesondere den Punkt mit dem größten Abstand zu einer Wandung des Innenbehälters darstellen. Der Scheitelpunkt kann insbesondere auf einer Achse liegen, die senkrecht zu einer Mittelachse des Innenbehälters steht. Diese Achse steht ferner insbesondere senkrecht zu einer Ebene, in der die größte Querschnittsfläche des gewölbten Abschnitts liegt. Der gewölbte Abschnitt kann insbesondere radiärsymmetrisch ausgebildet sein, wobei eine die Radiärsymmetrie definierende Symmetrieachse durch den Scheitelpunkt verläuft und insbesondere jene erwähnte Achse darstellen kann, die senkrecht zu der Mittelachse des Innenbehälters steht und/oder senkrecht zu der Ebene steht, in der die größte Querschnittsfläche des gewölbten Abschnitts liegt.

Eine entsprechende Achse, d.h. die die Radiärsymmetrie definierende Symmetrieachse und/oder die Achse, die senkrecht zu der Mittelachse des Innenbehälters steht, und/oder die Achse, die senkrecht zu der Ebene steht, in der die größte Querschnittsfläche des gewölbten Abschnitts liegt (wobei diese Achsen in der erläuterten Weise auch zusammenfallen können), kann jeweils durch den Scheitelpunkt des gewölbten Abschnitts verlaufen. Ist im Rahmen der nachfolgenden Erläuterungen daher von einer "Achse, die durch den Scheitelpunkt des gewölbten Abschnitts verläuft" die Rede, sei hierunter eine derartige Achse verstanden. Es versteht sich, dass eine "Achse" im hier verwendeten Sprachgebrauch eine geometrische Achse und nicht oder nicht notwendigerweise eine aus einem Material gebildete Achse darstellt. Ist am Scheitelpunkt ggf. eine Öffnung vorgesehen, verläuft diese Achse insbesondere durch den Mittelpunkt dieser Öffnung.

Ist vorstehend von einer "Radiärsymmetrie des gewölbten Abschnitts" die Rede, können insbesondere die Öffnungen in der Wandung des Fluidverteilerbehälters, die auch in dem gewölbten Abschnitt angeordnet sein können, von der Radiärsymmetrie ausgenommen sein. Die hier erfolgende Kennzeichnung des gewölbten Abschnitts als radiärsymmetrisch betrifft also ggf. nur die Wandung des gewölbten Abschnitts, aber nicht notwendigerweise die ggf. darin ausgebildeten Öffnungen.

Im Rahmen der vorliegenden Erfindung ist der Mittelpunkt zumindest einer der erwähnten mehreren Öffnungen in der Wandung des Fluidverteilerbehälters in dem gewölbten Abschnitt an einer Position angeordnet, die von einer Position des Scheitelpunkts abweicht. Insbesondere sind im Fall von zwei oder mehr Öffnungen die Mittelpunkte von zwei oder mehr als zwei Öffnungen auf diese Weise angeordnet. Im Gegensatz zu der eingangs erwähnten US 5,165,246 A sind also im Rahmen der vorliegenden Erfindung eine oder mehrere Öffnungen vorhanden, die nicht an einem tiefsten Punkt einer Ausbuchtung in einem Innenbehälter angeordnet ist bzw. sind. Die erfindungsgemäß vorgeschlagenen Maßnahmen betreffen weniger die Möglichkeit einer Restentnahme durch die Bereitstellung einer Öffnung am tiefsten Punkt, sondern in erster Linie die vereinfachte Fertigung in dem Fall, dass mehrere Leitungen an einen entsprechenden Behälter angeschlossen werden sollen. Gleichwohl kann auch am tiefsten Punkt bzw. am Scheitelpunkt eine weitere Öffnung ausgebildet sein, beispielsweise zur Anbringung einer Messleitung.

In einer Ausgestaltung der vorliegenden Erfindung ist der Mittelpunkt zumindest einer der erwähnten mehreren Öffnungen zwischen zwei Ebenen angeordnet, die senkrecht zu der erwähnten Achse durch den Scheitelpunkt stehen und insbesondere die Wandung des Fluidverteilerbehälters in dem gewölbten Abschnitt schneiden. Die Ebenen können aber auch einen zylindrischen Abschnitt, falls vorhanden, schneiden. Die beiden Ebenen definieren auf diese Weise eine obere und eine untere Begrenzung, zwischen denen die zumindest eine Öffnung angeordnet sein kann.

Gemäß einer spezifischen Ausgestaltung der vorliegenden Erfindung ist der Mittelpunkt zumindest einer der erwähnten mehreren Öffnungen auf einer Linie angeordnet, die einer Schnittlinie zwischen einer Schnittebene und der Wandung des Fluidverteilerbehälters in dem gewölbten Abschnitt entspricht, wobei die Schnittebene senkrecht zu der Achse durch den Scheitelpunkt steht und die Wandung des Fluidverteilerbehälters insbesondere in dem gewölbten Abschnitt schneidet. Die Schnittlinie ist damit insbesondere radiärsymmetrisch zu der Achse ausgebildet.

Ist hier von Mittelpunkten von Öffnungen in der Wandung des Fluidverteilbehälters die Rede, seien hierunter insbesondere die Mittelpunkte der Übergänge zwischen dem Fluidverteilbehälter und den angeschlossenen Leitungen bzw. von entsprechenden Flanschen verstanden. Durch diese Mittelpunkte können auch insbesondere die Mittelachsen entsprechender Leitungen bzw. Flansche oder Stutzen verlaufen.

Vorteilhafterweise ist der gewölbte Abschnitt in Form eines Kugelsegments, insbesondere halbkugelförmig oder kalottenförmig bzw. in Form einer Kugelhaube bzw. Kugelkappe, ausgebildet. Über sein entsprechendes offenes Ende bzw. seinen offenen Querschnitt steht dieser kugelsegmentförmige Abschnitt zweckmäßigerweise mit dem inneren Behälter über dessen Öffnung in Fluidverbindung. Der kugelsegmentförmige Abschnitt kann über diesen offenen Querschnitt an den inneren Behälter angeschweißt sein. Die Öffnungen in der Wandung des Fluidverteilerbehälters zum Anschluss der Leitungen bzw. deren Mittelpunkte können entlang des Umfangs dieses kugelsegmentförmigen Abschnitts in der erläuterten Weise angeordnet sein, d.h. beispielsweise auf auf der Linie, die der Schnittlinie zwischen der Schnittebene und der Wandung des Fluidverteilerbehälters in dem gewölbten Abschnitt entspricht. Wie unten erläutert, kann der gewölbte Abschnitt auch eine Klöpperform aufweisen.

Bei einer Halbkugelform kann insbesondere eine minimale Wanddicke bei möglichst hoher Stabilität bei Druckbeaufschlagung erreicht werden. Ist der gewölbte Abschnitt dagegen kalottenförmig ausgebildet, kann dieser dagegen platzsparender in dem Zwischenbereich angeordnet werden und besitzt einen geringeren Raumbedarf als ein halbkugelförmiger Abschnitt. Er benötigt jedoch eine geringfügig dickere Wandstärke für die Stabilität bei Druckbeaufschlagung. Entsprechendes gilt auch bei einer Klöpperform, wie sie unten erläutert ist. In allen Fällen kann der gewölbte Abschnitt aber zumindest an einer Stelle mit einer Wandung mit geringerer Wandstärke als der Innenbehälter ausgebildet werden.

Der Fluidverteilerbehälter definiert ein mit dem inneren Behälter in Fluidverbindung stehendes Fluidvolumen, über welches gleichzeitig eine Vielzahl von Leitungen mit dem inneren Behälter verbunden werden kann. Um den Fluidverteilerbehälter mit dem inneren Behälter in Fluidverbindung zu bringen, muss vorteilhafterweise nur eine Bohrung in dem inneren Behälter erstellt werden, d.h. das Material mit der größeren Wandstärke auf diese Weise bearbeitet werden. Da der Fluidverteilerbehälter eine Vielzahl von Öffnungen aufweist und somit zum Anschluss einer Vielzahl von Leitungen vorgesehen ist, ist also nur eine Bohrung in dem inneren Behälter nötig, um dem inneren Behälter mit einer Vielzahl verschiedener Leitungen zu verbinden. Für den Anschluss der einzelnen Leitungen muss lediglich das Material mit der geringeren Materialstärke bearbeitet werden.

Im Gegensatz dazu sind bei einem herkömmlichen Kryogenbehälter, wie erwähnt, entsprechende innere Behälter zumeist einstückig ausgebildet und für jede Leitung, die mit dem inneren Behältern verbunden werden soll, wird ein separates Loch in den Mantel des entsprechenden inneren Behälters gebohrt. Herkömmlicherweise weisen innere Behälter somit eine Vielzahl verschiedener Bohrungen an unterschiedlichsten Stellen auf, an welchen jeweils eine Leitung angeschlossen ist. Durch die vorliegende Erfindung kann hingegen darauf verzichtet werden, den inneren Behälter direkt mit entsprechenden Leitungen zu verbinden. Vielmehr können zumindest einige Leitungen mit dem inneren Behälter über einen oder mehrere Fluidverteilerbehehälter verbunden werden. Dies schließt selbstverständlich nicht aus, dass andere Leitungen bei Bedarf auch direkt an den Innenbehälter angeschlossen werden können.

Über den Fluidverteilerbehälter können eine Vielzahl verschiedener Leitungen mit dem inneren Behälter verbunden werden und zweckmäßigerweise wird nur eine Bohrung für diese verschiedener Leitungen benötigt. An jeder Bohrung in dem inneren Behälter können somit gleichzeitig mehrere Leitungen über den entsprechenden mit dieser Bohrung verbundenen Fluidverteilerbeheälter angeschlossen werden. Dies reduziert den Konstruktions- und Fertigungsaufwand für den Kryogenbehälter erheblich, da nicht eine Vielzahl verschiedener Bohrungen an verschiedenen Stellen in dem inneren Behälter erzeugt werden müssen, sondern an einer einzigen Bohrung mehrere Leitungen gleichzeitig mit dem inneren Behälter verbunden werden können. Somit ist es nicht notwendig, für jede Leitung einen separaten einzelnen Stutzen vorzusehen und mit dem inneren Behälter zu verbinden. Lediglich der Fluidverteilerbehälter wird mit dem inneren Behälter verbunden. Somit werden eine zentrale Anordnung von mehreren Leitungen und eine kostengünstige und aufwandsarme Möglichkeit zur Verbindung mehrerer Leitungen mit dem inneren Behälter ermöglicht. Im Vergleich zu herkömmlichen Kryogenbehältern können somit eine Materialersparnis, eine Reduzierung des Fertigungsaufwands und damit eine Kostenersparnis erreicht werden. Ein besonderer Vorteil ergibt sich durch die Verwendung einer geringeren Wandstärke für den Fluidverteilerbehälter, wie zuvor erläutert.

Die gemäß einer besonders bevorzugten Ausgestaltung der Erfindung vorgenommene zweistückige Ausgestaltung des inneren Behälters und des Fluidverteilerbehälters wird es ermöglicht, den Kryogenbehälter bzw. dessen inneren und äußeren Behälter einerseits sowie den bzw. die Fluidverteilerbehälter andererseits unabhängig voneinander zu produzieren und diese insbesondere mit unterschiedlichen Wandstärken herzustellen. Für die Herstellung eines Kryogenbehälters können zweckmäßigerweise entsprechende Fluidverteilerbehälter bereitgestellt und im Zuge des Herstellungsprozesses mit dem inneren Behälter verbunden werden. Ferner wird es ermöglicht, Kryogenbehälter auf konstruktiv einfache Weise nachzurüsten.

Vorteilhafterweise ist an eine oder sind an mehrere der Öffnungen jeweils eine aus dem äußeren Behälter hinausführende Leitung angeschlossen, beispielsweise jeweils mittels eines Flanschs. Derartige Leitungen sind insbesondere zur Entnahme eines in dem inneren Behälter gelagerten Fluids und/oder zum Befüllen des inneren Behälters mit einem Fluid vorgesehen. Die Leitungen können beispielsweise mit einem Ventil, insbesondere einem Sicherheitsventil, verbunden sein. Durch die Fluidverbindung zu dem inneren Behälter füllt sich der Fluidverteiler mit einem Teil des Fluids in dem inneren Behälter und dieses kann beispielsweise von dort mittels der über die Öffnungen in der Wandung des Fluidverteilerbehälters angeschlossene(n) Leitung(en) entnommen werden. Beispielsweise beim Befüllen über die angeschlossene(n) Leitung(en) strömt das Fluid zunächst in den Fluidverteilerbehälter und von dort aus über die Fluidverbindung bzw. die Öffnung in der Wand des inneren Behälters in den inneren Behälter. Die Leitung kann als eine Messleitung ausgebildet sein, in der zweckmäßigerweise Sensoren angeordnet sind, beispielsweise um einen Druck, eine Temperatur usw. des Fluids in dem Kryogenbehälter zu messen.

Erfindungsgemäß erstreckt sich der Innenraum des wenigstens eine Fluidbehälters von einer Öffnung in der Wand des inneren Behälters ausgehend in den Zwischenraum. Der wenigstens eine Fluidbehälter ist vorzugsweise am Rande dieser Öffnung mit dem inneren Behälter verbunden, beispielsweise hieran angeschweißt. Dabei steht der Innenraum über diese Öffnung mit dem inneren Behälter in Fluidverbindung.

Eine Öffnung des inneren Behälters zu dem Fluidverteilbehälter entspricht in ihrem Durchmesser vorteilhafterweise einem Durchmesser des sich anschließenden Fluidverteilbehälters. Mit anderen Worten geht also in einer derartigen Ausgestaltung der innere Behälter in den Fluidverteilbehälter über, ohne dass an der Übergangsstelle eine Einengung oder Einschnürung vorgesehen ist. Auf diese Weise lassen sich insbesondere Toträume, die sich in einem strömungsberuhigten Bereich hinter einer entsprechenden Einschnürung ausbilden könnten, vermeiden. Hierdurch kann verhindert werden, dass für derartige Toträume typische negative Effekte wie eine Entmischung oder eine Gasansammlung auftreten.

Die Öffnung des inneren Behälters zu dem Fluidverteilbehälter kann in einer anderen vorteilhaften Ausgestaltung jedoch auch einen Durchmesser aufweisen, der geringer als der sich anschließende Durchmesser des Fluidverteilerbehälters ist. Mit anderen Worten kann in dieser Ausgestaltung an der Verbindungs- bzw. Übergangsstelle zwischen dem inneren Behälter und dem Fluidverteilerbehälter eine Querschnittsreduzierung oder Einschnürung vorgesehen sein. Diese kann insbesondere in Form eines die Öffnung umgebenden, sich radial nach innen erstreckenden Kragens oder Stegs ausgebildet sein. Der Kragen oder Steg kann einstückig mit dem inneren Behälter oder dem Fluidverteilbehälter ausgebildet sein oder zusätzlich bereitgestellt werden. Durch eine derartige Verjüngung des Durchmessers kann beispielsweise sichergestellt werden, dass der Fluidverteilerbehälter stets mit Flüssigkeit gefüllt bleibt, auch wenn der Flüssigkeitsspiegel in dem inneren Behälter, beispielsweise beim Transport, Bewegungen unterworfen ist. Mit anderen Worten kann hierdurch auch bei Schwappbewegungen der Flüssigkeit in dem inneren Behälter beim Transport gewährleistet werden, dass der Fluidverteilbehälter mit Flüssigkeit gefüllt bleibt.

Vorteilhafterweise ist, wie erwähnt, der der wenigstens eine Fluidverteilerbehälter an den inneren Behälter bzw. an die Öffnung in dessen Wand angeschweißt. Somit kann zweckmäßigerweise eine gasdichte Verbindung zwischen Fluidverteilerbehälter und innerem Behälter erreicht werden. Insbesondere ist es somit nicht notwendig, für jede Leitung jeweils ein separates Loch in den Mantel bzw. den Boden des inneren Behälters zu schneiden oder zu bohren und jeweils eine Schweißkantenvorbereitung durchzuführen. Für die Vielzahl von Leitungen, welche mit dem Fluidverteilerbehälter verbunden ist, werden zweckmäßigerweise nur ein Loch im Mantel bzw. den Boden des inneren Behälters und eine Schweißkantenvorbereitung benötigt.

Bevorzugt ist der wenigstens eine Fluidverteilerbehälter vollständig in dem evakuierbaren Zwischenraum zwischen dem inneren Behälter und dem äußeren Behälter angeordnet. Somit ist der Fluidverteilerbehälter platzsparend in dem kryogenen Behälter angeordnet.

Gemäß einer besonders vorteilhaften Ausgestaltung der vorliegenden Erfindung ist der wenigstens eine Fluidverteilerbehälter an dem gewölbten Abschnitt mit dem inneren Behälter verbunden, der gewölbte Abschnitt schließt sich also direkt an den inneren Behälter an. Er kann über den gewölbten Abschnitt an den inneren Behälter angeschweißt sein. In besonders vorteilhafter Weise kann der Fluidverteilerbehälter somit als z.B. halbkugelförmiges oder kalottenförmiges separates Bauteil ausgebildet sein, welches über seinen offenen Querschnitt mit dem inneren Behälter verbunden, insbesondere an dem inneren Behälter angeschweißt werden kann. Da die Wandung des Fluidverteilerbehälters zumindest an einer Stelle eine geringere Wandstärke aufweist als der innere Behälter, kann für den Anschluss des Fluidverteilerbehälters an den inneren Behälter vorteilhafterweise ein ringförmiger Anschlussbereich des Fluidverteilerbehälters mit größerer Wandstärke bzw. einer Wandstärke ausgebildet sein, die der Wandstärke des inneren Behälters entspricht.

In einer anderen Ausgestaltung weist der wenigstens eine Fluidverteilerbehälter einen zylinderförmigen Abschnitt auf, der mit dem gewölbten Abschnitt verbunden ist. Dieser kann aus den erläuterten Gründen zumindest im Anschlussbereich ebenfalls mit einer größeren Wandstärke ausgebildet sein als der gewölbte Bereich. Er kann jedoch auch in Abschnitten die erwähnte geringere Wandstärke aufweisen, um hier eine vorteilhafte Anbringung von Leitungen zu ermöglichen. Zweckmäßigerweise wird über diesen zylinderförmigen Abschnitt die Fluidverbindung des Fluidverteilerbehälters zu dem inneren Behälter hergestellt. Vorzugsweise ist der zylinderförmige Abschnitt an den inneren Behälter angeschweißt.

Der zylinderförmige Abschnitt kann sich dabei zweckmäßigerweise direkt an den gewölbten Abschnitt anschließen. Der zylinderförmige und der gewölbte Abschnitt können dabei einstückig ausgebildet sein oder der zylinderförmige Abschnitt kann mit dem gewölbten Abschnitt zweckmäßig verbunden sein, beispielsweise über eine Schweißverbindung. Es können sich zwischen dem gewölbten Abschnitt und dem zylinderförmigen Abschnitt insbesondere aber auch noch weitere zweckmäßig geformte Abschnitte befinden.

Vorteilhafterweise schließt sich an den insbesondere kalottenförmig ausgebildeten gewölbten Abschnitt mit einem Wölbungsradius r₁ ein Krempenabschnitt mit einem Eckradius r₂ an, mit r₁ > r₂, an welchen sich der zylinderförmige Abschnitt anschließt. Dimensionen, insbesondere Wanddicken und Krümmungsradien, können dabei gemäß Normen oder anderen Vorgaben gewählt werden, beispielsweise gemäß der Norm DIN EN 13445-3:2016-12 ("Unbefeuerte Druckbehälter - Teil 3: Konstruktion"), gemäß der Norm DIN EN 12285-1:2003-07 ("Werksgefertigte Tanks aus Stahl - Teil 1: Liegende zylindrische ein- und doppelwandige Tanks zur unterirdischen Lagerung von brennbaren und nichtbrennbaren wassergefährdenden Flüssigkeiten") oder gemäß der Norm DIN EN 12285-2:2005-05 ("Werksgefertigte Tanks aus Stahl - Teil 2: Liegende zylindrische ein- und doppelwandige Tanks zur oberirdischen Lagerung von brennbaren und nichtbrennbaren wassergefährdenden Flüssigkeiten").

Insbesondere kann der Fluidverteilerbehälter einen Abschnitt aufweisen, welcher als sog. Klöpperboden oder Korbbogenboden geformt ist bzw. eine Klöpperform aufweist. Dimensionen dieses als Klöpperboden oder Korbbogenboden geformten Abschnitts, z.B. äußerer Bodendurchmesser, innerer Bodendurchmesser, Wölbungsradius, Eckradius, zylindrische Bordhöhe, Wölbungshöhe, gesamte Bodenhöhe innen und/oder Wanddicke, können dabei beispielsweise gemäß der Norm DIN 28013:2012-06 ("Gewölbte Böden - Korbbogenform") oder DIN 28011:2012-06 ("Gewölbte Böden - Klöpperform") gewählt werden.

Vorteilhafterweise weist der Kryogenbehälter zwei Fluidverteilerbehälter auf. Ein erster Fluidverteilerbehälter hiervon ist vorzugsweise an einem ersten Ende des inneren Behälters angeordnet, insbesondere an einem oberen bzw. einem vorderen Ende. Ein zweiter Fluidverteilerbehälter ist vorzugsweise an einem dem ersten Ende gegenüberliegenden zweiten Ende des inneren Behälters angeordnet, insbesondere an einem unteren bzw. hinteren Ende. Der erste Fluidverteilerbehälter kann insbesondere für Leitungen zum Befüllen und/oder zur Fluidentnahme von oben bei einem stehend gelagerten kryogenen Behälter bzw. von vorne bei einem liegend gelagerten kryogenen Behälter vorgesehen sein. Der zweite Fluidverteilerbehälter kann insbesondere für Leitungen zum Befüllen und/oder zur Fluidentnahme von unten bei einem stehend gelagerten Kryogenbehälter bzw. von hinten bei einem liegend gelagerten Kryogenbehälter vorgesehen sein.

Der Kryogenbehälter bzw. dessen Innenbehälter kann in dieser Ausgestaltung insbesondere einen zylindrischen Abschnitt aufweisen, wobei sich an zumindest einem Ende (dem erwähnten ersten und/oder zweiten Ende) des zylindrischen Abschnitts ein gewölbter, beispielsweise kugelsegmentförmiger oder eine Klöpperform aufweisender Abschnitt anschließt. Der zumindest eine gewölbte Abschnitt des Kryogenbehälters bzw. dessen Innenbehälter weist eine zentrale Öffnung auf, an die ein Fluidverteilerbehälter der zuvor erläuterten Art und in der zuvor erläuterten Weise angebracht ist. Die Achse durch den Scheitelpunkt des gewölbten Abschnitts des Fluidverteilerbehälters entspricht dabei insbesondere einer Längsachse des zylindrischen Abschnitts des inneren Behälters.

Bevorzugt weist die Wandung des Fluidverteilerbehälters drei Öffnungen, weiter bevorzugt vier Öffnungen zum Anschluss von jeweils einer Leitung auf. Diese Öffnungen bzw. Anschlussstutzen können im Rahmen der oben erläuterten Anordnung zueinander insbesondere zumindest teilweise äquidistant angeordnet sein. Ihre Mittelpunkte können also beispielsweise äquidistant auf der gemeinsamen Linie, die der Schnittlinie zwischen der Schnittebene und der Wandung des Fluidverteilerbehälters in dem gewölbten Abschnitt entspricht, angeordnet sein. Beispielsweise können jeweils zwei benachbarte Öffnungen einen Winkel zwischen 30° und 90° einschließen, insbesondere einen Winkel zwischen 45° und 60°, insbesondere einen Winkel von 50° oder zumindest im Wesentlichen 50°, wobei die genannten Winkel in der erwähnten Schnittebene liegen. Eine "zumindest teilweise" äquidistante Anordnung liegt dabei insbesondere dann vor, wenn drei oder mehr der Öffnungen wechselseitig mit gleichem Abstand zueinander angeordnet sind, aber an anderer Stelle ein größerer Abstand vorgesehen ist. Dies ergibt sich beispielsweise durch eine äquidistante Gruppierung entsprechender Öffnungen auf einer Seite.

Bevorzugt ist der Kryogenbehälter als Druckbehälter ausgebildet und dazu eingerichtet, das Fluid mit einem Druck von bis zu 40 bar zu lagern. Zweckmäßigerweise ist der kryogene Druckbehälter zum Lagern von Flüssiggasen eingerichtet, beispielsweise von Flüssigstickstoff (LIN), Flüssigargon (LAR), Flüssigsauerstoff (LOX), flüssigem Kohlendioxid (LCO₂), Flüssigwasserstoff (LH₂), Flüssigerdgas (LNG) oder flüssigem Lachgas (LN₂O).

Das erfindungsgemäß vorgeschlagene Verfahren zeichnet sich insbesondere dadurch aus, dass zunächst ein innerer Behälter mit einer oder mehreren Öffnungen zum Anschluss eines oder jeweils eines Fluidverteilerbehälters bereitgestellt wird, und dass sodann an die eine oder die mehreren Öffnungen ein oder jeweils ein Fluidverteilerbehälter angebracht wird, wobei der innere Behälter vor dem Anschluss des einen oder jeweils einen Fluidverteilerbehälters insbesondere durch Kaltrecken bearbeitet wird, um dessen mechanische Eigenschaften zu verbessern, insbesondere um auf diese Weise die Festigkeit des inneren Behälters zu erhöhen. Durch die nachträgliche Anbringung des oder der Fluidverteilerbehälters kann die Fertigung und insbesondere die Bearbeitung durch Kaltrecken verbessert werden bzw. brauchen nicht mehrere Leitungsöffnungen mit hohem Fertigungsaufwand in einem entsprechend hergestellten und ggf. gehärteten Behälter ausgebildet werden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figur 1: zeigt in ihren Teilfiguren schematisch einen Fluidverteilerbehälter.
- Figur 2: zeigt in ihren Teilfiguren schematisch eine bevorzugte Ausgestaltung eines Fluidverteilerbehälters.
- Figur 3: zeigt in ihren Teilfiguren schematisch bevorzugte Ausgestaltungen von Kryogenbehältern mit bevorzugten Ausgestaltungen von Fluidverteilerbehältern.

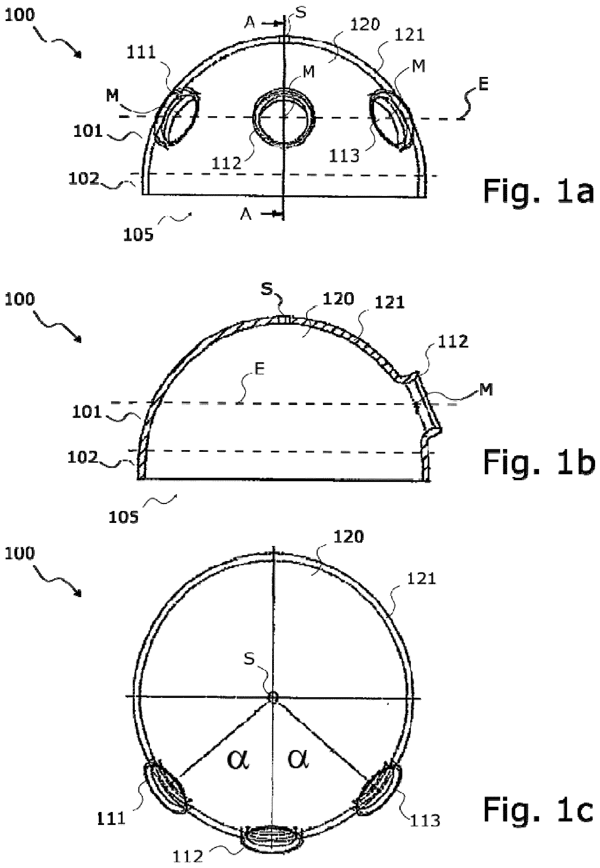

In Figur 1 ist eine bevorzugte Ausgestaltung eines Fluidverteilerbehälters schematisch dargestellt und mit 100 bezeichnet. Teilfigur 1a zeigt den Fluidverteilerbehälter 100 in einer schematischen Frontansicht, Teilfigur 1b in einer schematischen und weiter vereinfachten Querschnittsansicht entlang der in Teilfigur 1a gezeigten Linie bzw. Achse A-A. Teilfigur 1c zeigt eine schematische Draufsicht auf den Fluidverteilerbehälter 100. Identische Bezugszeichen in den Figuren bezeichnen gleiche oder baugleiche Elemente.

Der Fluidverteilerbehälter 100 weist einen Innenraum 120 auf, der mittels einer Wandung 121 begrenzt ist. Weiterhin weist der Fluidverteilerbehälter 100 einen gewölbten Abschnitt 101 und einen sich an den gewölbten Abschnitt 101 anschließenden zylinderförmigen Abschnitt 102 auf. Der gewölbte Abschnitt 101 ist in diesem Beispiel halbkugelförmig ausgebildet. Die nachfolgenden Erläuterungen beziehen sich auf einen halbkugelförmig ausgebildeten gewölbten Abschnitt 101, gelten aber in gleicher Weise auch für einen andersartig ausgebildeten gewölbten Abschnitt 101. Der zylinderförmige Abschnitt 102 kann auch entfallen, so dass der Fluidverteilerbehälter 100 lediglich den gewölbten Abschnitt 101 aufweisen kann.

In dem gewölbten Abschnitt 101 weist der Fluidverteilerbehälter 100 in seiner Wandung 121 drei Öffnungen 111, 112, 113 auf, die im dargestellten Beispiel auf einer Schnittebene der Halbkugel mit einer Ebene E bzw. einer entsprechenden Schnittlinie liegen, wobei die Schnittebene senkrecht zu der Schnittachse A-A steht und die Schnittachse A-A durch einen Scheitelpunkt S des halbkugelförmigen Abschnitts 101 verläuft. Die Schnittachse A-A stellt dabei insbesondere auch eine Symmetrieachse des gewölbten Abschnitts 101 dar, zu dieser der gewölbte Abschnitt 101, ggf. mit Ausnahme der Öffnungen 111, 112, 113 radiärsymmetrisch ausgebildet ist. Die Öffnungen 111 und 112 sowie die Öffnungen 112 und 113 bzw. Achsen, die jeweils durch ihre Mittelpunkte M verlaufen, schließen dabei jeweils einen Winkel α ein, der im dargestellten Beispiel 50° beträgt.

Im Rahmen der hier veranschaulichten Ausgestaltung der vorliegenden Erfindung sind also die Mittelpunkte M der Öffnungen 111, 112, 113 in der Wandung 121 des Fluidverteilerbehälters 100 auf einer gemeinsamen Linie angeordnet, die einer Schnittlinie zwischen einer Schnittebene E und der Wandung 121 des Fluidverteilerbehälters in dem gewölbten Abschnitt 101 entspricht, wobei die Schnittebene E senkrecht zu der erwähnten Achse A-A durch den Scheitelpunkt S steht und die Wandung 121 des Fluidverteilerbehälters 100 in dem gewölbten Abschnitt 101 schneidet. Die Schnittlinie ist damit insbesondere radiärsymmetrisch zu der Achse A-A ausgebildet. Wie erwähnt, kann im Rahmen der Erfindung jedoch auch eine andersartige Anordnung in dem gewölbten Abschnitt 101 vorgesehen sein.

Der Fluidverteilerbehälter 100 ist dazu eingerichtet, mit einem inneren Behälter eines Kryogenbehälters verbunden und in Fluidverbindung gebracht zu werden. Insbesondere kann zu diesem Zweck ein Ende 105 des gewölbten Abschnitts 101 oder auch des zylinderförmigen Abschnitts 102 mit einer Wand des inneren Behälters verbunden und somit mit dem inneren Behälter verschweißt werden. Der Durchmesser in dem zylinderförmigen Abschnitts 102 ist insbesondere konstant und entspricht zweckmäßigerweise dem Durchmesser am Ende des gewölbten Abschnitts 101.

Die Öffnungen 111, 112, 113 in der Wandung 121 sind insbesondere durch Anschlussstutzen definiert dazu eingerichtet, jeweils mit einer Leitung bzw. Rohrleitung beispielsweise zur Entnahme eines in dem inneren Behälter gelagerten Fluids und/oder zum Befüllen des inneren Behälters mit einem Fluid verbunden zu werden.

Insbesondere kann das Ende 105 des gewölbten Abschnitts 101 bzw. des zylinderförmigen Abschnitts 102 mit einer Öffnung in der Wand des inneren Behälters verbunden werden, um eine direkte Fluidverbindung zwischen dem Innenraum 120 und dem inneren Behälter herzustellen. Alternativ oder zusätzlich kann auch an einer der Öffnungen 111, 112, 113 eine Leitung angeschlossen werden, welche ebenfalls mit dem inneren Behälter verbunden ist, um eine indirekte Fluidverbindung zwischen dem Innenraum 120 und dem inneren Behälter herzustellen.

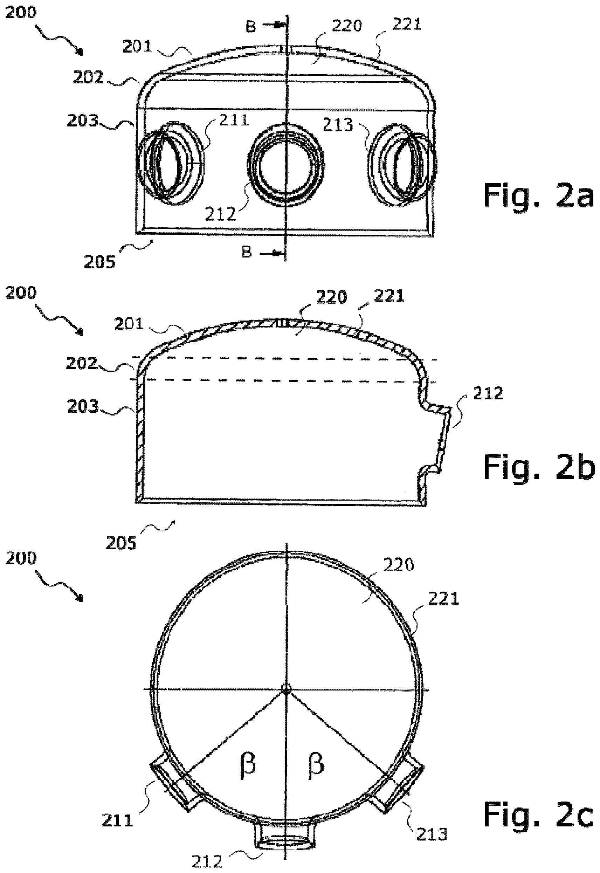

Figur 2 zeigt analog zu Figur 1 eine bevorzugte Ausgestaltung eines Fluidverteilerbehälters 200. Der Fluidverteilerbehälter 200 ist in Teilfigur 2a in einer schematischen Frontansicht dargestellt, in Teilfigur 2b in einer schematischen Querschnittsansicht entlang der in Figur 2a gezeigten Linie B-B und in Teilfigur 2c in einer schematischen Draufsicht.

Der Fluidverteilerbehälter 200 weist einen Innenraum 220 begrenzt durch eine Wandung 221 auf sowie einen gewölbten, kalottenförmigen Abschnitt 201, einen sich daran anschließenden Krempenabschnitt 202 und einen sich daran anschließenden zylinderförmigen Abschnitt 203.

In dem zylinderförmigen Abschnitt 203 weist der Fluidverteilerbehälter 200 in seiner Wandung 221 drei Öffnung 211, 212, 213 auf, wobei die Öffnungen 211 und 212 sowie die Öffnungen 212 und 213 jeweils einen Winkel β einschließen, der beispielsweise 50° beträgt.

Analog zu den Öffnungen 111, 112, 113 sind auch die Öffnungen 211, 212, 213 dazu eingerichtet, jeweils mit einer Leitung bzw. Rohrleitung beispielsweise zur Entnahme eines in einem inneren Behälter eines Kryogenbehälters, insbesondere eines Druckbehälters, auf den nachfolgend Bezug genommen wird, auf den die nachfolgenden Erläuterungen aber nicht beschränkt sind, gelagerten Fluids und/oder zum Befüllen des inneren Behälters mit dem Fluid verbunden zu werden.

Der Fluidverteilerbehälter 200 ist weiterhin dazu eingerichtet, mit einem derartigen inneren Behälter in geeigneter Weise verbunden und in Fluidverbindung gebracht zu werden. Insbesondere kann zu diesem Zweck ein Ende 205 des zylinderförmigen Abschnitts 203 mit einer Öffnung in einer Wand des inneren Behälters verbunden und somit mit dem inneren Behälter verschweißt werden. Alternativ oder zusätzlich kann an einer der Öffnungen 111, 112, 113 eine mit dem inneren Behälter verbundene Leitung angeschlossen werden.

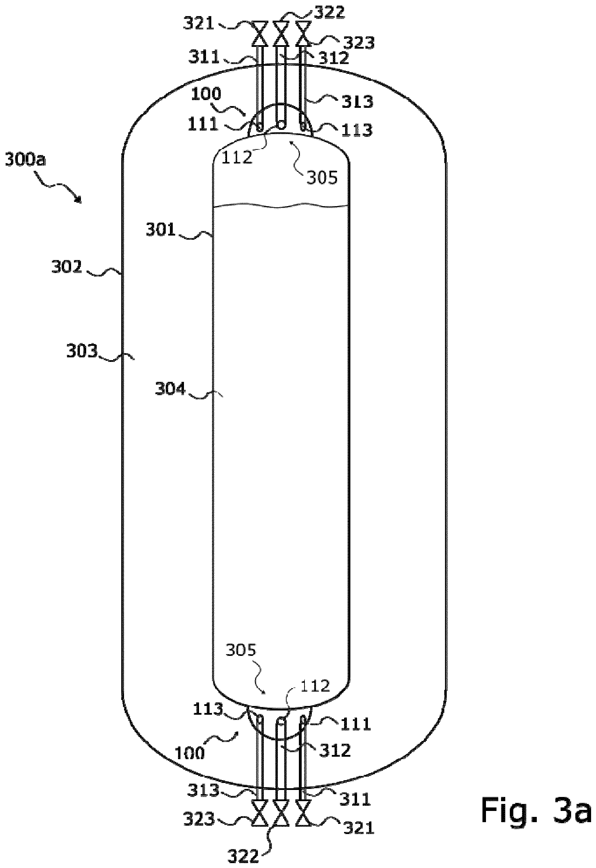

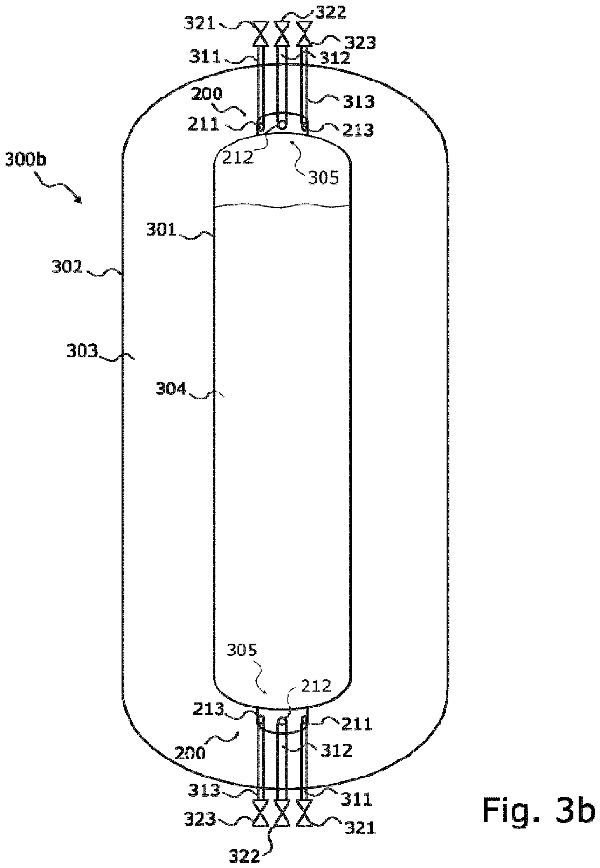

In Figur 3 sind in den Teilfiguren 3a und 3b jeweils bevorzugte Ausgestaltungen erfindungsgemäßer Kryogenbehälter schematisch dargestellt und mit 300a bzw. 300b bezeichnet.

Die Kryogenbehälter 300a bzw. 300b sind jeweils als vakuumisolierte Doppelwandbehälter ausgebildet und weisen jeweils einen inneren Behälter 301, einen äußeren Behälter 302 und einen evakuierbaren Zwischenraum 303 zwischen dem inneren Behälter 301 und dem äußeren Behälter 302 auf. In dem Zwischenraum 303 kann jeweils beispielsweise ein Isoliermaterial mit geringer Wärmeleitfähigkeit angeordnet sein, z.B. Perlit.

Die Kryogenbehälter 300a bzw. 300b sind jeweils beispielsweise zur Lagerung und Transport von Flüssiggasen 304 vorgesehen. Flüssiggas 304, z.B. Flüssigstickstoff (LIN) kann dabei in dem inneren Behälter 301 unter einem Druck von bis zu 40 bar gelagert werden. Zum Befüllen des inneren Behälters 301 mit dem Flüssiggas 304 bzw. zur Entnahme des Flüssiggases 304 aus dem inneren Behälter 301 weisen die Kryogenbehälter 300a und 300b jeweils zwei bevorzugte Ausgestaltungen eines Fluidverteilerbehälters auf.

Dabei weist der in Figur 3a gezeigte Kryogenbehälter 300a zwei Fluidverteilerbehälter 100 auf, wie sie beispielsweise in Figur 1 dargestellt sind. Der in Figur 3b dargestellte Kryogenbehälter 300b weist zwei Fluidverteilerbehälter 200 auf, wie sie beispielsweise in Figur 2 dargestellt sind.

Im vorliegenden Beispiel von Figur 3a ist ein erster Fluidverteilerbehälter 100 an einem oberen Ende des inneren Behälters 301 angeordnet und ein zweiter Fluidverteilerbehälter 100 an einem unteren Ende des inneren Behälters 301. Die Fluidverteilerbehälter 200 stehen jeweils mit dem inneren Behälter 301 in Fluidverbindung. Die Fluidverteilerbehälter 100 erstrecken sich dabei jeweils von einer Öffnung 305 in einer Wand des inneren Behälters 301 ausgehend in den Zwischenraum 303 und sind jeweils vollständig innerhalb des Zwischenraums 303 angeordnet. Zu diesem Zweck sind die Fluidverteilerbehälter 100 mit dem inneren Behälter 301 insbesondere verschweißt, insbesondere an dem jeweiligen Ende 105 des zylinderförmigen Abschnitts 103 oder auch direkt an dem Ende des gewölbten, halbkugelförmigen Abschnitts 101. Die Durchmesser der Öffnungen 305 entsprechen dabei dem jeweiligen Durchmesser des Endes 105 des zylinderförmigen Abschnitts 102 bzw. des gewölbten, halbkugelförmigen Abschnitts 101. Die Wandung des Fluidverteilerbehälters 100 bzw. dessen halbkugelförmigen Abschnitts 101 weist zumindest an einer Stelle eine geringere Wandstärke auf als der Innenbehälter 301.

An den Öffnungen111, 112, 113 der Fluidverteilerbehälter 100 ist jeweils eine Leitung 311, 312, 313 angeschlossen, welche jeweils durch den Zwischenraum 303 aus dem äußeren Behälter 302 hinausführt. Über diese Leitungen 311, 312, 313 kann der innerer Behälter 301 mit dem Flüssiggas 304 befüllt werden bzw. das Flüssiggas 304 kann entnommen werden. In jeder der Leitungen 311, 312, 313 ist zweckmäßigerweise jeweils ein Ventil 321, 322, 323 vorgesehen.

Auf entsprechende Weise ist im Beispiel von Figur 3b ein erster Fluidverteilerbehälter 200 an dem oberen Ende des inneren Behälters 301 angeordnet und ein zweiter Fluidverteilerbehälter 200 an dem unteren Ende des inneren Behälters 301, wobei die Fluidverteilerbehälter 200 jeweils mit dem inneren Behälter 301 in Fluidverbindung stehen. Auch die Fluidverteilerbehälter 200 sind zweckmäßigerweise mit dem inneren Behälter 301 verschweißt, insbesondere an dem jeweiligen Ende 205 des zylinderförmigen Abschnitts 203. Zweckmäßigerweise entsprechen dabei die Durchmesser der Öffnungen 305 dem jeweiligen Durchmesser des Endes 205 des zylinderförmigen Abschnitts 203. Bezüglich der Wandstärken sei auf die obigen Erläuterungen explizit verwiesen.

Auch an den Öffnungen 211, 212, 213 der Fluidverteilerbehälter 200 sind Leitungen 311, 312, 313 angeschlossen, welche jeweils durch den Zwischenraum 303 aus dem äußeren Behälter 302 hinausführen und zum Befüllen des inneren Behälters 301 mit Flüssiggas 304 bzw. zur Entnahme des Flüssiggases 304 aus dem inneren Behälter 301 vorgesehen sind.

Es versteht sich, dass für den Kryogenbehälter beispielsweise auch sowohl ein Fluidverteilerbehälter 100 gemäß Figur 1 als auch ein Fluidverteilerbehälter 200 gemäß Figur 2 verwendet werden können. So kann beispielsweise an dem oberen Ende des inneren Behälters 301 ein Fluidverteilerbehälter 100 gemäß Figur 1 angeordnet sein und an dem unteren Ende des inneren Behälters 301 ein Fluidverteilerbehälter 200 gemäß Figur 2 oder umgekehrt.

### Bezugszeichenliste

- 100: Fluidverteilerbehälter
- 101: gewölbten Abschnitt, halbkugelförmiger Abschnitt
- 102: zylinderförmiger Abschnitt
- 105: Ende des zylinderförmigen Abschnitts 102
- 111: Anschlussstutzen
- 112: Anschlussstutzen
- 113: Anschlussstutzen
- 120: Innenraum des Fluidverteilerbehälters 100
- 121: Wandung des Fluidverteilerbehälters 100

- 200: Fluidverteilerbehälter
- 201: gewölbten Abschnitt, kalottenförmiger Abschnitt
- 202: Krempenabschnitt
- 203: zylinderförmiger Abschnitt
- 205: Ende des zylinderförmigen Abschnitts 203
- 211: Anschlussstutzen
- 212: Anschlussstutzen
- 213: Anschlussstutzen
- 220: Innenraum des Fluidverteilerbehälters 100
- 221: Wandung des Fluidverteilerbehälters 100

- 300a: Kryogenbehälter
- 300b: Kryogenbehälter
- 301: innerer Behälter
- 302: äußerer Behälter
- 303: evakuierbarer Zwischenraum
- 305: Öffnung in der Wand des inneren Behälters 301
- 311: Leitung
- 312: Leitung
- 313: Leitung
- 321: Ventil
- 322: Ventil
- 323: Ventil

## Patentansprüche

1. Kryogenbehälter (300a, 300b) mit einem inneren Behälter (301), mit einem äußeren Behälter (302), mit einem evakuierbaren Zwischenraum (303) zwischen dem inneren Behälter (301) und dem äußeren Behälter (302), und mit wenigstens einem Fluidverteilerbehälter (100, 200), der einen Innenraum (120, 220) aufweist, der sich von einer Wand des inneren Behälters (301) ausgehend in den Zwischenraum (303) erstreckt, zumindest teilweise innerhalb des Zwischenraums (303) angeordnet ist, und mit dem inneren Behälter (301) in Fluidverbindung steht, wobei der Innenraum (120, 220) des Fluidverteilerbehälters (100, 200) mittels einer Wandung (121, 221) begrenzt ist, die einen gewölbten Abschnitt (101, 201) aufweist, wobei die Wandung (121, 221) mehrere Öffnungen (111, 112, 113, 211, 212, 213) aufweist, die zum Anschluss von jeweils zumindest einer Leitung (311, 312, 313) eingerichtet sind, **dadurch gekennzeichnet, dass** eine Wandstärke der Wandung (121, 221) an zumindest einer Stelle weniger als 90% einer Wandstärke des inneren Behälters (301) beträgt.

2. Kryogenbehälter (300a, 300b) nach Anspruch 1, bei dem ein Mittelpunkt (M) zumindest einer der mehreren Öffnungen (111, 112, 113, 211, 212, 213) an einer Position angeordnet ist, die von einer Position eines Scheitelpunkts (S) des gewölbten Abschnitts (101, 201) abweicht.

3. Kryogenbehälter (300a, 300b) nach Anspruch 1, bei dem ein Mittelpunkt (M) zumindest einer der mehreren Öffnungen (111, 112, 113, 211, 212, 213) zwischen zwei Ebenen angeordnet ist, die senkrecht zu einer Achse (A-A) durch den Scheitelpunkt (S) steht und die Wandung (121, 221) in dem gewölbten Abschnitt (101, 201) schneidet, oder auf einer Linie angeordnet ist, die eine Schnittlinie zwischen einer Schnittebene (E) und der Wandung (121, 221) ist, wobei die Schnittebene (E) senkrecht zu einer Achse (A-A) durch den Scheitelpunkt (S) steht und die Wandung (121, 221) in dem gewölbten Abschnitt (101, 201) schneidet.

4. Kryogenbehälter (300a, 300b) nach einem der vorstehenden Ansprüche, wobei an zumindest eine der mehreren Öffnungen (111, 112, 113, 211, 212, 213) zumindest eine aus dem äußeren Behälter (302) hinausführende Leitung (311, 312, 313) angeschlossen ist.

5. Kryogenbehälter (300a, 300b) nach einem der voranstehenden Ansprüche, wobei der wenigstens eine Fluidverteilerbehälter (100, 200) an den inneren Behälter (301) angeschweißt ist.

6. Kryogenbehälter (300a, 300b) nach einem der voranstehenden Ansprüche, wobei der wenigstens eine Fluidverteilerbehälter (100, 200) vollständig in dem evakuierbaren Zwischenraum (303) zwischen dem inneren Behälter (301) und dem äußeren Behälter (302) angeordnet ist.

7. Kryogenbehälter (300a, 300b) nach einem der voranstehenden Ansprüche, wobei der gewölbte Abschnitt (101, 201) halbkugelförmig (101) oder kalottenförmig (201) ausgebildet ist oder eine Klöpperform aufweist.

8. Kryogenbehälter (300a) nach einem der vorstehenden Ansprüche, wobei der wenigstens eine Fluidverteilerbehälter (100) an dem gewölbten Abschnitt (101) mit dem inneren Behälter (301) verbunden ist oder der wenigstens eine Fluidverteilerbehälter (100, 200) einen zylinderförmigen Abschnitt (102, 203) aufweist, der mit dem gewölbten Abschnitt (101, 201) verbunden ist.

9. Kryogenbehälter (300a, 300b) nach Anspruch 8, wobei der wenigstens eine Fluidverteilerbehälter (100, 200) in einem Bereich, in dem er mit dem inneren Behälter (301) verbunden ist, eine größere Wandstärke aufweist als in einem anderen Bereich.

10. Kryogenbehälter (300a, 300b) nach einem der voranstehenden Ansprüche mit zwei Fluidverteilerbehältern (100, 200), wobei ein erster Fluidverteilerbehälter (100, 200) an einem ersten Ende des inneren Behälters (301) angeordnet ist und wobei ein zweiter Fluidverteilerbehälter (100, 200) an einem dem ersten Ende gegenüberliegenden zweiten Ende des inneren Behälters (301) angeordnet ist.

11. Kryogenbehälter (300a, 300b) nach einem der voranstehenden Ansprüche, wobei die Wandung (120, 220) des Fluidverteilerbehälters (100, 200) drei Öffnungen (111, 112, 113, 211, 212, 213), insbesondere vier Öffnungen, zum Anschluss von jeweils einer Leitung (311, 312, 313) aufweist.

12. Kryogenbehälter (300a, 300b) nach einem der voranstehenden Ansprüche, dazu eingerichtet, das Fluid (304) mit einem Druck von bis zu 40 bar zu lagern.

13. Verfahren zur Herstellung eines Kryogenbehälters (300a, 300b) nach einem der Ansprüche 1 bis 12, **dadurch gekennzeichnet, dass** zunächst ein innerer Behälter (301) mit einer oder mehreren Öffnungen zum Anschluss eines oder jeweils eines Fluidverteilerbehälters (100, 200) bereitgestellt wird, und dass sodann an die eine oder die mehreren Öffnungen ein oder jeweils ein Fluidverteilerbehälter (100, 200) angebracht wird.

## Claims

1. Cryogenic container (300a, 300b) comprising an inner container (301), an outer container (302), an evacuable intermediate space (303) between the inner container (301) and the outer container (302), and at least one fluid distributor container (100, 200) having an inner space (120, 220) which extends from a wall of the inner container (301) into the intermediate space (303), is arranged at least in part within the intermediate space (303), and is fluidically connected to the inner container (301), the inner space (120, 220) of the fluid distributor container (100, 200) being delimited by means of a wall (121, 221) having a curved portion (101, 201), the wall (121, 221) having a plurality of openings (111, 112, 113, 211, 212, 213) which are designed for the connection of at least one line (311, 312, 313),**characterized in that** a wall thickness of the wall (121, 221) at least one point is less than 90% of a wall thickness of the inner container (301).

2. Cryogenic container (300a, 300b) according to claim 1, wherein a center point (M) of at least one of the plurality of openings (111, 112, 113, 211, 212, 213) is arranged at a position that deviates from a position of an apex (S) of the curved portion (101, 201).

3. Cryogenic container (300a, 300b) according to claim 1, wherein a center point (M) of at least one of the plurality of openings (111, 112, 113, 211, 212, 213) is arranged between two planes which is perpendicular to an axis (A-A) through the apex (S) and which intersects the wall (121, 221) in the curved portion (101, 201), or is arranged on a line which is a line of intersection between a sectional plane (E) and the wall (121, 221), wherein the sectional plane (E) is perpendicular to an axis (A-A) through the apex (S) and intersects the wall (121, 221) in the curved portion (101, 201).

4. Cryogenic container (300a, 300b) according to any of the preceding claims, wherein at least one of the plurality of openings (111, 112, 113, 211, 212, 213) is connected to at least one line (311, 312, 313) leading out of the outer container (302).

5. Cryogenic container (300a, 300b) according to any of the preceding claims, wherein the at least one fluid distributor container (100, 200) is welded to the inner container (301).

6. Cryogenic container (300a, 300b) according to any of the preceding claims, wherein the at least one fluid distributor container (100, 200) is arranged completely in the evacuable intermediate space (303) between the inner container (301) and the outer container (302).

7. Cryogenic container (300a, 300b) according to any of the preceding claims, wherein the curved portion (101, 201) is hemispherical (101) or dome-shaped (201) or has a torispherical shape.

8. Cryogenic container (300a) according to any of the preceding claims, wherein the at least one fluid distributor container (100) is connected to the inner container (301) on the curved portion (101) or the at least one fluid distributor container (100, 200) has a cylindrical portion (102, 203) connected to the curved portion (101, 201).

9. Cryogenic container (300a, 300b) of claim 8, wherein the at least one fluid distributor container (100, 200) has a greater wall thickness in a region in which it is connected to the inner container (301) than in another region.

10. Cryogenic container (300a, 300b) according to any of the preceding claims, comprising two fluid distributor containers (100, 200), wherein a first fluid distributor container (100, 200) is arranged at a first end of the inner container (301), and wherein a second fluid distributor container (100, 200) is arranged at a second end of the inner container (301) opposite the first end.

11. Cryogenic container (300a, 300b) according to any of the preceding claims, wherein the wall (120, 220) of the fluid distributor container (100, 200) has three openings (111, 112, 113, 211, 212, 213), in particular four openings, for connection of a line (311, 312, 313) in each case.

12. Cryogenic container (300a, 300b) according to any of the preceding claims, designed to store the fluid (304) at a pressure of up to 40 bar.

13. Method for producing a cryogenic container (300a, 300b) according to any of claims 1 to 12 **characterized in that** an inner container (301) is first provided with one or more openings for the connection of a or in each case one fluid distributor container (100, 200), and **in that** a or in each case one fluid distributor container (100, 200) is then attached to the one or more openings.

## Revendications

1. Récipient cryogénique (300a, 300b) présentant un récipient interne (301), un récipient externe (302), un espace intermédiaire (303) pouvant être mis sous vide entre le récipient interne (301) et le récipient externe (302) et au moins un récipient de distribution de fluide (100, 200), qui présente un espace interne (120, 220) qui s'étend à partir d'une paroi du récipient interne (301) dans l'espace intermédiaire (303), qui est agencé au moins partiellement à l'intérieur de l'espace intermédiaire (303) et qui est en communication fluidique avec le récipient interne (301), l'espace interne (120, 220) du récipient de distribution de fluide (100, 200) étant délimité au moyen d'une paroi (121, 221) qui présente une section bombée (101, 201), la paroi (121, 221) présentant plusieurs ouvertures (111, 112, 113, 211, 212, 213) qui sont conçues pour le raccordement d'à chaque fois au moins une conduite (311, 312, 313), **caractérisé en ce qu'**une épaisseur de la paroi (121, 221) en au moins un emplacement représente moins de 90 % d'une épaisseur de paroi du récipient interne (301).

2. Récipient cryogénique (300a, 300b) selon la revendication 1, dans lequel un point central (M) d'au moins l'une desdites plusieurs ouvertures (111, 112, 113, 211, 212, 213) est agencé en une position qui diffère d'une position d'un sommet (S) de la section bombée (101,201).

3. Récipient cryogénique (300a, 300b) selon la revendication 1, dans lequel un point central (M) d'au moins l'une desdites plusieurs ouvertures (111, 112, 113, 211, 212, 213) est agencé entre deux plans qui est perpendiculaire à un axe (A-A) passant à travers le sommet (S) et qui coupe la paroi (121, 221) dans la section bombée (101, 201) ou est agencé sur une ligne qui est une ligne de coupe entre un plan de coupe (E) et la paroi (121, 221), le plan de coupe (E) étant perpendiculaire à un axe (A-A) passant à travers le sommet (S) et coupant la paroi (121, 221) dans la section bombée (101, 201).

4. Récipient cryogénique (300a, 300b) selon l'une quelconque des revendications précédentes, au moins une conduite (311, 312, 313) sortant du récipient externe (302) étant raccordée à au moins l'une desdites plusieurs ouvertures (111, 112, 113, 211, 212, 213).

5. Récipient cryogénique (300a, 300b) selon l'une quelconque des revendications précédentes, ledit au moins un récipient de distribution de fluide (100, 200) étant soudé sur le récipient interne (301).

6. Récipient cryogénique (300a, 300b) selon l'une quelconque des revendications précédentes, ledit au moins un récipient de distribution de fluide (100, 200) étant agencé complètement dans l'espace intermédiaire (303) pouvant être mis sous vide entre le récipient interne (301) et le récipient externe (302).

7. Récipient cryogénique (300a, 300b) selon l'une quelconque des revendications précédentes, la section bombée (101, 201) étant conçue sous forme de demi-sphère (101) ou de calotte (201) ou présentant une forme torosphérique.

8. Récipient cryogénique (300a) selon l'une quelconque des revendications précédentes, ledit au moins un récipient de distribution de fluide (100) étant relié au niveau de la section bombée (101) au récipient interne (301) ou ledit au moins un récipient de distribution de fluide (100, 200) présentant une section cylindrique (102, 203) qui est reliée à la section bombée (101, 201).

9. Récipient cryogénique (300a, 300b) selon la revendication 8, ledit au moins un récipient de distribution de fluide (100, 200) présentant, dans une zone dans laquelle il est relié au récipient interne (301), une épaisseur de paroi supérieure à celle dans une autre zone.

10. Récipient cryogénique (300a, 300b) selon l'une quelconque des revendications précédentes présentant deux récipients de distribution de fluide (100, 200), un premier récipient de distribution de fluide (100, 200) étant agencé au niveau d'une première extrémité du récipient interne (301) et un deuxième récipient de distribution de fluide (100, 200) étant agencé au niveau d'une deuxième extrémité, opposée à la première extrémité, du récipient interne (301).

11. Récipient cryogénique (300a, 300b) selon l'une quelconque des revendications précédentes, la paroi (120, 220) du récipient de distribution de fluide (100, 200) présentant trois ouvertures (111, 112, 113, 211, 212, 213), en particulier quatre ouvertures, pour le raccordement d'à chaque fois une conduite (311, 312, 313).

12. Récipient cryogénique (300a, 300b) selon l'une quelconque des revendications précédentes, conçu pour stocker le fluide (304) à une pression allant jusqu'à 40 bar.

13. Procédé pour la fabrication d'un récipient cryogénique (300a, 300b) selon l'une quelconque des revendications 1 à 12, **caractérisé en ce qu'**on met d'abord à disposition un récipient interne (301) présentant une ou plusieurs ouvertures pour le raccordement d'un ou d'à chaque fois un récipient de distribution de fluide (100, 200) et **en ce qu'**on fixe ensuite, à ladite une ou auxdites plusieurs ouvertures, un ou à chaque fois un récipient de distribution de fluide (100, 200).
